# EUROPEAN PATENT APPLICATION

(11) **EP 4 292 484 A1**
(43) Date of publication of application: **20.12.2023**
(21) Application number: 22178560.3
(22) Date of filing: 13.06.2022
(51) Int. Cl.: A47J 43/07

(54) **HOUSING FOR A FOOD PROCESSOR**

(71) Applicant: BSH Hausgeräte GmbH, 81739 München (DE)
(72) Inventor: Mejac, Matej, 1431 Dol pri Hrastniku (SI); Brecko, Ales, 3000 Celje (SI); Pajk, Luka, 3000 Celje (SI); Cater, Matej, 3301 Petrovce (SI)

(57) **Abstract**

The invention relates to a housing (1) for a food processor, with a bayonet receptacle (2) for a mixing bowl. To improve the durability of the bayonet receptacle (2) it is proposed to form the bayonet receptacle (2) with a covering skin (4) from metal carried by a carrying element (5) formed from plastics. The covering skin (4) can be provided with cut-outs (7) that are filled by plastic elements (8) that incorporate bayonet grooves (3) and that are connected with the carrying element (5) being an injection moulding component moulded against the undersurface of the covering skin (4). This provides a durable housing for a food processor that is inexpensive to produce.

## Description

### AREA OF THE INVENTION

The present invention relates to a housing for a food processor with a bayonet receptacle for a mixing bowl.

### STATE OF THE ART

Food processors for households are generally known. They have a housing that covers an electric motor, gears and electronics of any kind. Such food processors are usually provided with a bowl within which a tool for the food processing is rotated by said motor. Instead of a bowl the food processor as well can be provided with a jug. For the present application the term bowl therefore shall include jugs etc. and the term food processors shall include kitchen machines as well. The tool of the food processor can either be a kneading hook for e.g. kneading dough or a blender knife or a grater or the like.

To achieve the processing there must be a relative movement between the tool and the bowl. Therefore, it is of importance to prevent the bowl from rotating together with the tool when food is processed. To achieve this, it is known to attach the bowl to the food processor in a non-rotatable manner.

For this bayonet receptacles are commonly used as they give the possibility to easily disconnect the bowl from the food processor after the food processing is done.

To connect a bowl to such a bayonet receptacle it is placed with a ring, that is provided at the bottom of the bowl, onto or into said bayonet receptacle. Then the bowl is turned within the receptacle, so that the bayonet connection of said bayonet receptacle engages.

As in a kitchen there can be found granular material as salt or sugar that can get in between the bowl and the surface of the receptacle, this turning can result in scratches on the surface of the receptacle and/or on the surface of the ring that is provided at the bottom of the bowl. This risk exists especially when the housing of the food processor is made from plastics that is easily scratched. Such plastics housings can be found e.g. with less expensive, reasonably priced machines.

The resulting scratches do not only impair the optical appearance of the food processor but as well form a problem under hygienic aspects. Debris as it appears in kitchen environment is more difficult to remove from a scratched surface than from a smooth surface.

### SUBJECT OF THE INVENTION

Accordingly, the subject of the present invention is to provide a solution so that the durability of a housing for a food processor can be improved. This is to be achieved in a cost-effective way as the market for food processors is cost sensitive.

### SUMMARY OF THE INVENTION

To achieve the subject of the present invention it is proposed to provide a housing for a food processor with a bayonet receptacle for a mixing bowl with a part being a receptacle having a covering skin made from metal that is carried by a carrying element formed from plastics.

The invention has the advantage that by using a covering skin made from metal the durability of the surface of this part is improved as well as its cleanability. At the same time forming a carrying element from plastics gives the possibility to integrate any connecting elements to the part through which it can be mounted in/on the housing for the food processor.

It is conceded that bayonet receptacles made all of metal are known in the art. These known receptacles are used with housings made from cast metal.

These known receptacles all of metal are mounted on the cast metal bodies by using screws that are screwed through the receptacle. These screws with the resulting gaps and grooves therefore are a disadvantage with view on the cleanability of the device.

### PREFERRED EMBODIMENTS OF THE INVENTION

Preferred embodiments with features that can be used either alone or in combination with each other are subject of the dependent claims. Any reference numbers in the claims are considered not to be restrictive but intended only to improve the legibility of the claims.

In a preferred embodiment the covering skin from metal as discussed above is produced as a deep drawn article. Thus, it can be produced in a precise manner and in a cost-effective way.

It is furthermore proposed to produce the part from covering skin and carrying element in that the carrying element is an injection moulding component moulded against the undersurface of the covering skin.

To improve the bonding of covering skin and carrying element it is proposed that a covering skin comprises undercut elements that are connected with its undersurface. These undercut elements can be welded to the covering skin or formed by flanging or the like. With these undercut elements a form fit results between the injection moulded carrying element and the covering skin. This results in a durable bonding between covering skin and carrying element.

The carrying element as an injection moulding component can be provided with connecting pins so that the part can be easily connected to the housing of the food processor. This facilitates the industrial mounting of the food processor.

With a preferred embodiment of the invention the covering skin from metal is provided with cut-outs that are filled by plastic elements that incorporate bayonet grooves and that are connected with the carrying element. This is of advantage as it is easier to make cut-outs into a metal sheet during a deep drawing process and to then form bayonet grooves into such plastic elements during the injection moulding process than to form bayonet grooves into metal during a deep drawing process.

In a further preferred embodiment the covering skin comprises slots through which sliding elements on the upper side of the covering skin are attached to the carrying element affixed to the covering skin's underside. Such sliding elements, that preferably are made from plastic, have the advantage of minimising the friction when turning the bowl sitting in the receptacle.

The sliding elements can be connected with the carrying elements by a welding process, e.g. by an ultrasonic welding process or by a laser welding process.

Such sliding elements have the advantage of additionally fixing the covering skin to the carrying element and furthermore it is possible to realise the mentioned welding in a fluid tight manner so that fluid that might be spilled into the receptacle will not affect the food processor's reliability.

### SHORT DESCRIPTION OF THE DRAWINGS

Further features and advantages can be learned from the following description of the figures that show a preferred embodiment but shall not be understood as being limiting for the present application and in which
- Fig. 1: shows a perspective view of a food processor;
- Fig. 2: shows a bayonet receptacle of a food processor for a mixing bowl in a perspective view from above;
- Fig. 3: shows a bayonet receptacle of a food processor for a mixing bowl in a perspective view from below;
- Fig. 4: shows the plastic element incorporating a bayonet groove in a sectional view and
- Fig. 5: shows the sliding element within the bayonet receptacle in a sectional view.

### DETAILED DESCRIPTION OF THE DRAWINGS

In the following description of a preferred embodiment same reference numbers are used for same parts.

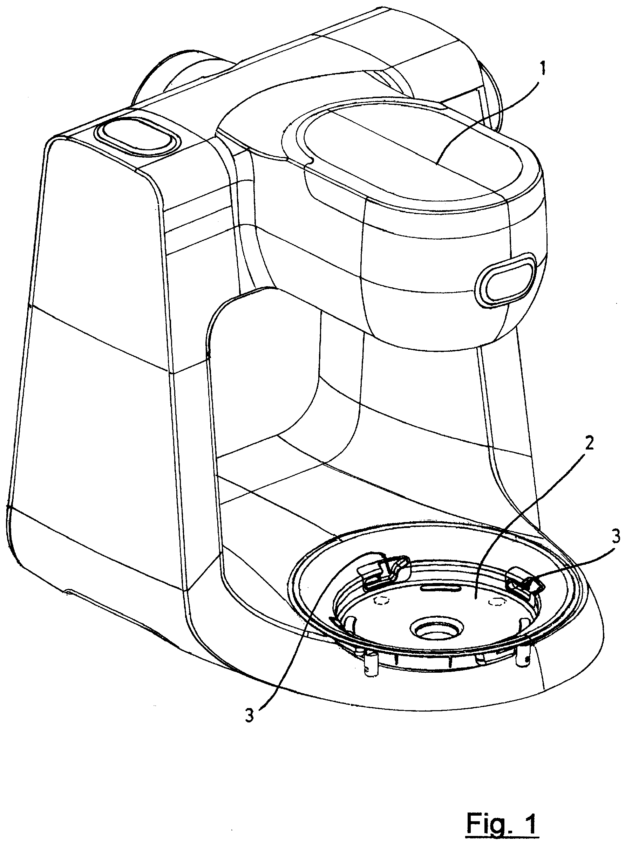

In Fig. 1 the housing 1 of a food processor for households is shown in ghosted lines. This housing 1 covers an electric motor, gears and electronics etc. All these are used to drive a tool for processing food (not shown) in a rotating manner. This tool extends into a bowl (not shown either). To ensure a relative movement between the tool and the bowl the bowl is attached to the food processor in a non-rotatable manner.

Therefore, the bowl is set with a ring-like foot into a receptacle 2 provided at the housing 1 of the food processor. The receptacle is realised as a bayonet receptacle which means that it is provided with bayonet grooves 3. Into these grooves 3 pins are inserted that are projecting in radial direction from the ring-like foot of the bowl. The pins hold the bowl within the receptacle 2 and can as well be used to recognize the presence of a bowl with a bowl recognition system.g. to unlock the movement of the processing tool.

In the shown embodiment the receptacle 2 is a separate part that is attached to the housing 1.

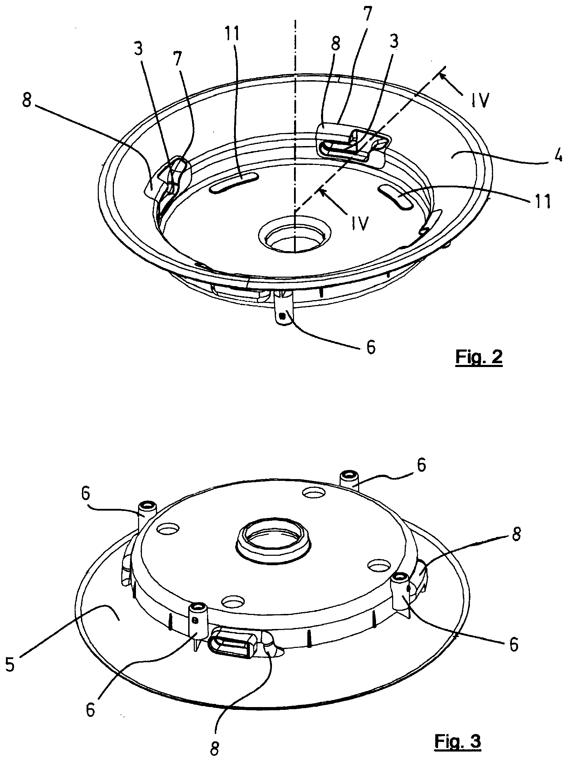

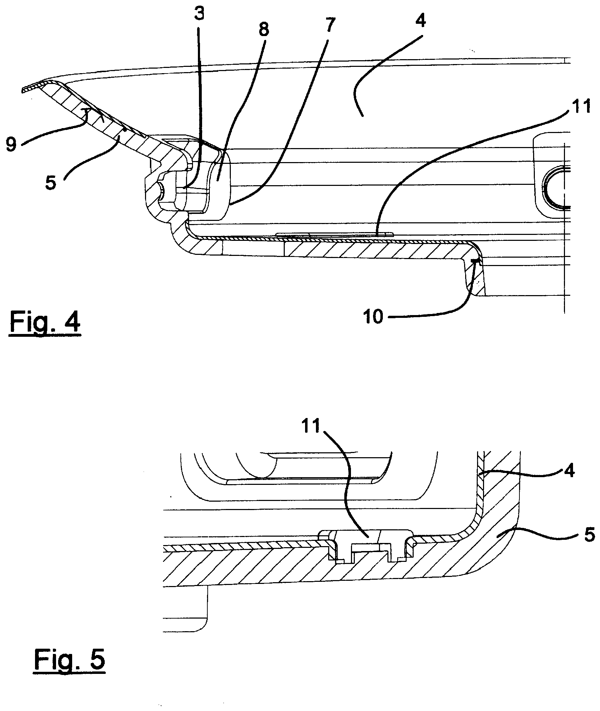

This part is depicted in Fig. 2 in a perspective view from above and in Fig. 3 in a perspective view from below. In Fig. 4 is shown a sectional view along the line VI - VI in Fig. 2.

It can be seen that this part has on top a layer that is made from metal as a covering skin 4. This covering skin 4 from metal improves the durability of the receptacle and like this of the whole food processor.

The covering skin 4 is produced as a deep drawn piece, which allows for a high quality and consistency of its production process.

This covering skin 4 is then placed in an injection moulding machine and in it a carrying element 5 is moulded against the undersurface of the covering skin 4.

As the carrying element 5 is produced in an injection moulding process it is possible to integrally shape it with connecting pins 6 that are used to later fix the part consisting from covering skin 4 and carrying element 5 to the housing 1.

With an injection moulding process such delicate details as said pins 6 are easier to realise. Accordingly, the bayonet grooves 3 are formed with the carrying element 5. Therefore, the covering skin 4 is provided with cut-outs 7. Behind these cut-outs 7 are situated plastic elements 8 that incorporate the bayonet grooves 3.

As can be seen from Figs. 3 and 4 the plastic elements 8 as well are integrally shaped with the carrying element 5.

It is understood that the bonding between the carrying element 5 and the covering skin 4 is of importance. To achieve this bonding the covering skin 4 comprises undercut elements 9 that are fixedly attached to its undersurface. These undercut elements 9 can be spot welded to the undersurface of the covering skin 4. Furthermore, such undercut elements can be formed as flanges 10, either again by welding a flange to the undersurface or by crimping the covering skin's edge. With such undercut elements 9 or 10 a durable form fit can be achieved.

At last sliding elements 11 provided within the receptacle 2 shall be explained.

The sliding elements 11 are provided on the bottom of said receptacle 2 on the upper surface of the covering skin 4. They have the task to form a contact surface onto which a bowl is set that is put with its foot into the bayonet receptacle 2. By choosing a plastic material with a low coefficient of friction for these sliding elements 11 they allow an easy fixing of the bowl within the bayonet receptacle 2 for that the bowl has to be turned.

To affix these sliding elements 11 there are provided slots in circumferential direction within the covering skin 4 through which the sliding elements 11 are in contact with the carrying element 5 below the covering skin 4. Sliding elements 11 and carrying element 5 are then bonded by ultrasonic welding or by laser welding. Like this they are properly connected and as well form a fluid tight seal of the provided slots.

The invention provides a durable housing for a food processor that is inexpensive to produce.

### LIST OF REFERENCE NUMBERS

- 1.: housing
- 2.: bayonet receptacle
- 3.: bayonet groove
- 4.: covering skin
- 5.: carrying element
- 6.: connecting pin
- 7.: cut-out
- 8.: plastic element
- 9.: undercut element
- 10.: flange
- 11.: sliding element

## Claims

1. Housing (1) for a food processor, with a bayonet receptacle (2) for a mixing bowl
**characterised in that**
the receptacle (2) has a covering skin (4) from metal carried by a carrying element (5) formed from plastics.

2. Housing according to claim 1,
**characterised in that**
the covering skin (4) from metal is a deep drawn article.

3. Housing according to claims 1 or 2,
**characterised in that**
the carrying element (5) is an injection moulding component moulded against the undersurface of the covering skin (4).

4. Housing according to one of the claims above,
**characterised in that**
the covering skin (4) comprises undercut elements (9, 10) connected with its undersurface.

5. Housing according to one of the claims above,
**characterised in that**
the carrying element (5) is provided with connecting pins (6) to be connected to the housing (1).

6. Housing according to one of the claims above,
**characterised in that**
the covering skin (4) is provided with cut-outs (7) that are filled by plastic elements (8) incorporating bayonet grooves (3) and that are connected with the carrying element (5).

7. Housing according to one of the claims above,
**characterised in that**
the covering skin (4) comprises slots through which sliding elements (11) on the upper side of the covering skin (4) are attached to the carrying element (5) affixed to the covering skin's underside.

8. Housing according to one of the claims above,
**characterised in that**
the sliding elements (11) are connected with the carrying element (5) by a welding process.
